# EUROPÄISCHE PATENTSCHRIFT

(11) **EP 3 549 821 B1**
(45) Veröffentlichungstag und Bekanntmachung des Hinweises auf die Patenterteilung: **11.08.2021**
(21) Anmeldenummer: 18165911.1
(22) Anmeldetag: 05.04.2018
(51) Int. Cl.: B60N 2/68, B60R 21/207

(54) **FAHRZEUGSITZ**
VEHICLE SEAT
SIÈGE DE VÉHICULE

(43) Veröffentlichungstag der Anmeldung: 09.10.2019
(73) Patentinhaber: Adient Engineering and IP GmbH, 51399 Burscheid (DE)
(72) Erfinder: MUEHLENBROCK, Ludger, 45665 Recklinghausen (DE); MUELLER, Toralf, 51373 Leverkusen (DE)
(74) Vertreter: Liedhegener, Ralf

(56) Entgegenhaltungen:
- EP-A2- 0 788 941
- FR-A1- 2 924 992
- GB-A- 2 296 476
- US-A1- 2017 057 448

## Beschreibung

Die Erfindung betrifft einen Fahrzeugsitz, insbesondere Kraftfahrzeugsitz, aufweisend ein Sitzteil und eine Lehne, wobei wenigstens das Sitzteil oder die Lehne einen Rahmen aufweist, wobei der Rahmen wenigstens ein Rahmenseitenteil umfasst.

### Stand der Technik

Fahrzeugsitze werden aktuell mit integrierten Sicherheitsmerkmalen zum Schutz des Fahrzeuginsassen bereitgestellt. Fahrzeugsitze müssen derart ausgebildet sein, dass der Fahrzeugsitz strukturell einwandfrei ist und die für einen Fahrzeuginsassen notwendige Unterstützung bereitstellt. Um die Sicherheitsmerkmale eines Fahrzeugsitzes zu verbessern, kann ein Airbag in die Fahrzeugsitzkonstruktion eingebaut werden. Wenn ein Airbag in die Fahrzeugsitzkonstruktion integriert ist, muss der Fahrzeugsitz eine angemessene Entfaltung des Airbags ermöglichen.

Die DE 10 2017 120 434 A1 bezieht sich im Allgemeinen auf eine Fahrzeugsitzbaugruppe und insbesondere auf eine Befestigungsarchitektur und Energieübertragungskonstruktion für die Steuerung einer Seitenairbagentfaltung an der Rückenlehne der Fahrzeugsitzbaugruppe.

Aus der FR 2 924 992 A1 ist ein Fahrzeugsitz mit einer Struktur umfassend linke und rechte seitliche Flansche bekannt, die miteinander verbunden und nebeneinander und entlang einer seitlichen Richtung angeordnet sind. Die Flansche sind durch eine Platte definiert, die sich entlang der Längsrichtung zwischen zwei Enden der Struktur erstreckt. Der Flansch integriert einen halbzylindrischen Aufnahmeabschnitt, der sich entlang der Längsrichtung erstreckt. Der Aufnahmeabschnitt weist eine radiale Öffnung auf, gegen die sich ein Führungsabschnitt erstreckt. Ferner ist ein Gasgenerator beschrieben, der mit einem Airbag in Verbindung steht.

Aus der EP 0 788 941 A2 ist eine Seitenaufprall-Airbagvorrichtung in einem Sitzlehnenrahmen einer Sitzstruktur bekannt, wobei der Sitzlehnenrahmen einen Seitenrahmen aufweist, der jeweils an einer entsprechenden Seite eines Sitzes in Querrichtung vorgesehen ist. Ein Airbag ist in einem konkaven Abschnitt aufgenommen, welcher in dem einer Fahrzeugtür gegenüberliegenden Seitenrahmen ausgebildet ist, so dass sich der konkave Abschnitt von einem Endabschnitt des Sitzlehnenrahmens in Querrichtung des Sitzes nach innen erstreckt. Der konkave Abschnitt nimmt einen Gasgenerator und einen gefalteten Airbag auf. Ein Sitzpolster ist zum Abdecken des Sitzlehnenrahmens vorgesehen, und ein Bezug ist zum Abdecken des Sitzpolsters vorgesehen. Der Bezug bedeckt den Airbag, der in dem konkaven Teil und dem Sitzpolster aufgenommen ist.

Aus der GB 2 296 476 A ist eine Rückenlehne bekannt, welche eine Rahmenstruktur mit zwei Seitenwänden aufweist. Ein Airbagmodul wird durch eine kompakte Montagestruktur an einer Seitenwand angebracht, um die Seitenwand zu verstärken. Die Seitenwand weist eine halbzylindrische Vertiefung zur Aufnahme des Airbagmoduls auf.

Aus der US 2017/057448 A1 ist ein Insassensicherheitssystem bekannt, welches ein an einem Fahrzeugsitzrahmen montierbares Airbagmodul aufweist. Das Airbagmodul umfasst einen Grundkörper und einen von einem Rahmen aufnehmbaren Rückhaltemechanismus. Der Grundkörper ist an dem Rahmen befestigbar.

### Aufgabe

Der Erfindung liegt die Aufgabe zu Grunde, einen Fahrzeugsitz der eingangs genannten Art zu verbessern, insbesondere einen Fahrzeugsitz bereitzustellen, welcher eine einfachere und platzsparendere Montage eines Gasdruckerzeugers und/oder eines Airbagmoduls ermöglicht.

### Lösung

Diese Aufgabe wird erfindungsgemäß gelöst, durch einen Fahrzeugsitz, insbesondere Kraftfahrzeugsitz, aufweisend ein Sitzteil und eine Lehne, wobei wenigstens das Sitzteil oder die Lehne einen Rahmen aufweist, wobei der Rahmen wenigstens ein Rahmenseitenteil umfasst, wobei das Rahmenseitenteil eine Prägung zur Befestigung eines Gasdruckerzeugers für einen Airbag aufweist, wobei die Prägung einen ersten Abschnitt und einen dem ersten Abschnitt benachbarten zweiten Abschnitt umfasst, wobei der erste Abschnitt und der zweite Abschnitt der Prägung im Wesentlichen parallel zur Querrichtung entgegengesetzt eingeprägt bzw. ausgeprägt sind, wobei der erste Abschnitt in Richtung eines Rahmeninneren geprägt ist, wobei der zweite Abschnitt in Richtung eines Rahmenäußeren geprägt ist, wobei in einem Übergangsbereich zwischen dem ersten Abschnitt der Prägung und dem zweiten Abschnitt der Prägung eine Durchtrittsöffnung angeordnet ist.

Dadurch, dass in einem Übergangsbereich zwischen dem ersten Abschnitt der Prägung und dem zweiten Abschnitt der Prägung eine Durchtrittsöffnung angeordnet ist, lässt sich die Anzahl benötigter weiterer Teile zur Montage des Gasdruckerzeugers reduzieren. Ferner lässt sich hierdurch bei der Montage des Gasdruckerzeugers Zeit sparen und zudem sicherstellen, dass der Gasdruckerzeuger richtig eingebaut ist.

Vorteilhafte Ausgestaltungen, welche einzeln oder in Kombination miteinander eingesetzt werden können, sind nachfolgend beschreiben.

Der Rahmen kann die tragende Struktur der Lehne oder des Sitzteils sein. Das Rahmenseitenteil kann Bestandteil eines in der Lehne verbauten Rahmens sein. Das Rahmenseitenteil kann Bestandteil eines in dem Sitzteil verbauten Rahmens sein. Der Airbag kann ein in der Lehne angeordneter Seitenairbag sein. Der Airbag kann ein in einer Seitenwange des Sitzteils angeordneter Seitenairbag sein. Der Fahrzeugsitz kann einen Rahmen mit lediglich einem erfindungsgemäß mit einer Prägung versehenen Rahmenseitenteil aufweisen. Der Fahrzeugsitz kann einen Rahmen mit beidseitig jeweils einem erfindungsgemäß mit einer Prägung versehenen Rahmenseitenteil aufweisen.

Der erste Abschnitt der Prägung ist vorzugsweise in Richtung eines zweiten gegenüberliegenden Sitzrahmenseitenteils des Rahmens eingeprägt. Insbesondere ist der zweite Abschnitt der Prägung von einem zweiten gegenüberliegenden Sitzrahmenseitenteil des Rahmens weg ausgeprägt.

Im Bereich des ersten Abschnitts kann wenigstens eine Durchgangsbohrung angeordnet sein. Bevorzugt sind im Bereich des ersten Abschnitts eine Mehrzahl an Durchgangsbohrungen, insbesondere wenigstens zwei Durchgangsbohrungen, angeordnet. Die im Bereich des ersten Abschnitts angeordneten Durchgangsbohrungen sind insbesondere parallel zu einer Längserstreckung der Prägung und einander nebeneinander angeordnet. Die wenigstens zwei Durchgangsbohrungen können einer variablen Positionierung des Gasdruckerzeugers und/oder eines Airbagmoduls relativ zum Rahmenseitenteil dienen. Die wenigstens zwei Durchgangsbohrungen können einen Einsatz von unterschiedlich langen Gasdruckerzeugern ermöglichen.

Der Gasdruckerzeuger kann Mittel zur Befestigung an dem Rahmenseitenteil aufweisen. Der Gasdruckdruckerzeuger kann wenigstens abschnittsweise in das Rahmenseitenteil eingesteckt sein. Der Gasdruckdruckerzeuger kann mit dem Rahmenseitenteil verclipst sein. Der Gasdruckdruckerzeuger kann eine hakenförmige Nase aufweisen, welche in eine Durchgangsbohrung einsteckbar ist. Der Gasdruckerzeuger kann einen insbesondere senkrecht von einem Gehäuse des Gasdruckerzeugers abstehenden Gewindebolzen aufweisen. Der Gasdruckerzeuger kann mittels des Gewindebolzens an dem Rahmenseitenteil befestigbar sein. Der Gewindebolzen des Gasdruckerzeugers kann zur Montage durch wenigstens eine Durchgangsbohrung des Rahmenseitenteils hindurch geführt sein. Der Gewindebolzen des Gasdruckerzeugers kann mittels einer Mutter an dem Rahmenseitenteil fixierbar sein.

Die Prägung weist bevorzugt wenigstens eine Breite auf, um den Gasdruckerzeuger wenigstens teilweise, insbesondere wenigstens zur Hälfte, in der Prägung aufzunehmen.

Der Fahrzeugsitz kann im Fond eines Fahrzeuges angeordnet sein.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: schematisch einen Fahrzeugsitz,
- Fig. 2:: eine perspektivische Darstellung eines Rahmens einer Lehne,
- Fig. 3:: eine Seitenansicht auf eine Außenseite eines Rahmenseitenteils des Rahmens von Fig. 2,
- Fig. 4:: eine perspektivische Ansicht von schräg oben auf das Rahmenseitenteil von Fig. 3,
- Fig. 5:: eine vergrößerte Ansicht auf eine Innenseite des Rahmenseitenteils von Fig. 3, im Bereich von Durchgangsbohrungen,
- Fig. 6:: eine Darstellung eines Gasdruckerzeugers,
- Fig. 7:: eine der Fig. 2 entsprechende perspektivische Darstellung des Rahmens mit montiertem Gasdruckerzeuger,
- Fig. 8:: eine der Fig. 2 entsprechende Seitenansicht auf die Außenseite des Rahmenseitenteils mit montiertem Gasdruckerzeuger,
- Fig. 9:: eine Seitenansicht auf eine Innenseite des Rahmenseitenteils von Fig. 8, und
- Fig. 10:: eine Schnittdarstellung entlang der Linie X-X aus Fig. 8.

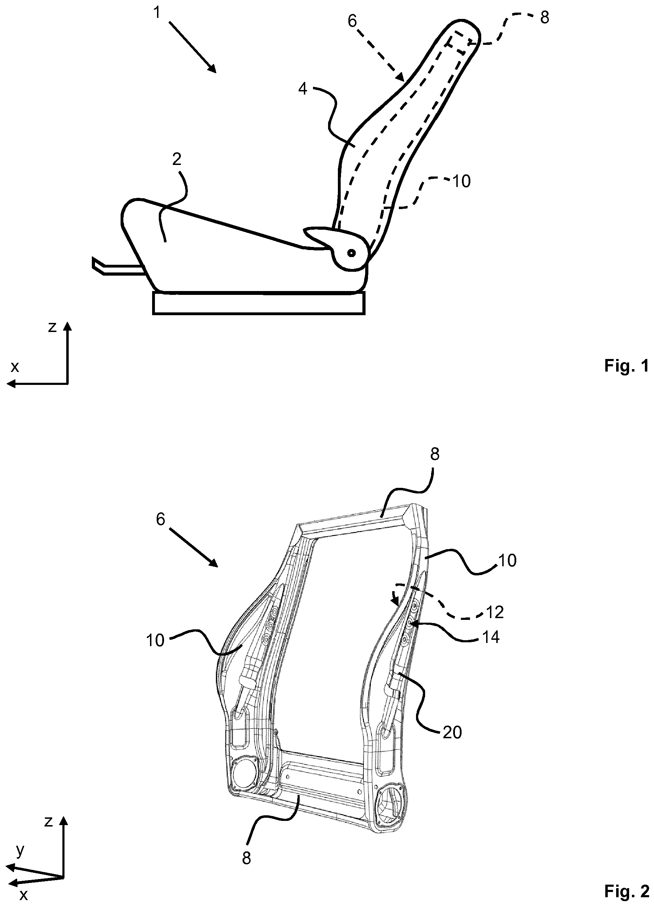

Der in Figur 1 schematisch dargestellte Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

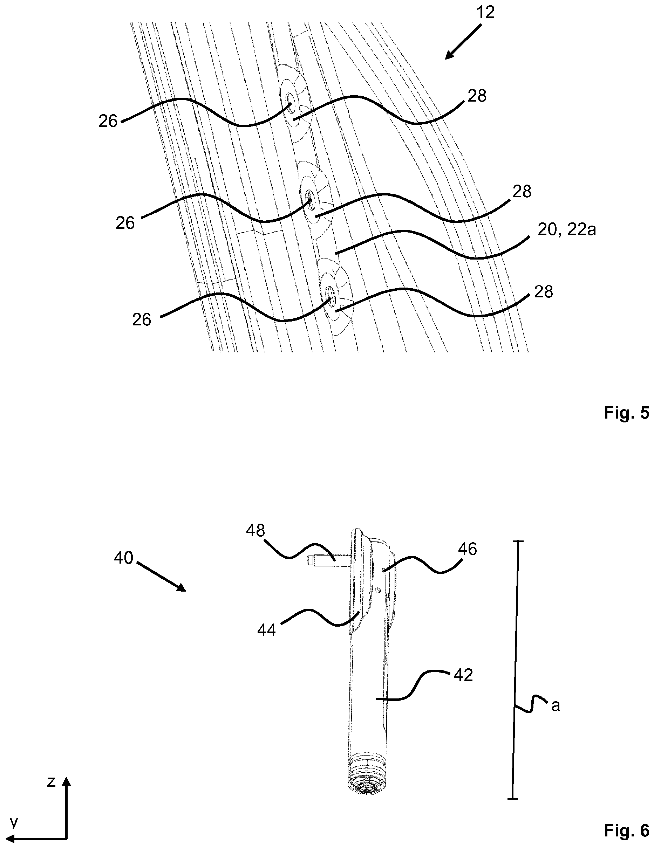

Der Fahrzeugsitz 1 für ein Kraftfahrzeug weist ein Sitzteil 2 und eine relativ zum Sitzteil 2 in ihrer Neigung einstellbare Lehne 4 auf. Wenigstens das Sitzteil 2 oder die Lehne 4 weist als tragende Struktur einen Rahmen 6 auf. Der Rahmen 6 kann aus Stahlblechteilen gefertigt sein. Vorliegend weist die Lehne 4 einen Rahmen 6 auf. Der Rahmen 6 umfasst wenigstens ein Rahmenseitenteil 10, vorliegend zwei in Querrichtung y gegenüberliegende Rahmenseitenteile 10. Die beiden Rahmenseitenteile 10 sind bevorzugt symmetrisch, insbesondere spiegelsymmetrisch, zu einer senkrecht zur Querrichtung y orientierte Mittenebene des Fahrzeugsitzes ausgestaltet. Das Rahmenseitenteil 10 weist eine Prägung 20 zur Befestigung eines in Fig. 6 dargestellten Gasdruckerzeugers 40. Der Gasdruckerzeuger 40 ist üblicherweise Bestandteil einer Baugruppe, eines sogenannten Airbagmoduls, und ist ferner vor der Montage an dem Fahrzeugsitz mit einem Airbag verbunden. Wenn nachfolgend eine Montage des Gasdruckerzeugers 40 beschrieben wird, bezieht sich dies ebenso auf eine Montage einer den Gasdruckerzeuger 40 aufweisenden Baugruppe bzw. eines Airbagmoduls.

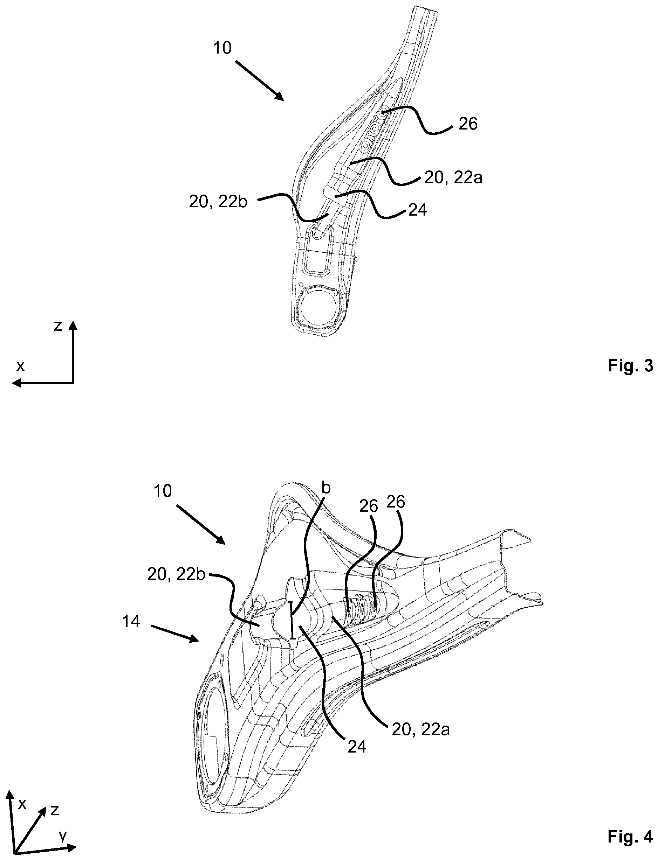

Fig. 2 zeigt eine perspektivische Darstellung des Rahmens 6 der Lehne 4. Der Rahmen 6 weist jeweils in Längsrichtung x betrachtet ein linkes und rechtes Rahmenseitenteil 10 auf. Die beiden Rahmenseitenteile 10 sind mit je einer oberen und unteren Quertraverse 8 verbunden. Fig. 3 zeigt eine Seitenansicht einer Außenseite 14 des in Längsrichtung x betrachtet linken Rahmenseitenteils 10 des Rahmens 6. In Fig. 4 ist eine perspektivische Ansicht von schräg oben auf das linke Rahmenseitenteil 10 gezeigt.

Die Prägung 20 umfasst einen ersten Abschnitt 22a und einen dem ersten Abschnitt 22a benachbarten zweiten Abschnitt 22b. Der erste Abschnitt 22a und der zweite Abschnitt 22b der Prägung 20 sind im Wesentlichen parallel zur Querrichtung y entgegengesetzt eingeprägt bzw. ausgeprägt. Der erste Abschnitt 22a ist relativ zum Rahmen 6 nach innen geprägt. Der zweite Abschnitt 22b ist relativ zum Rahmen 6 nach außen geprägt. In einem Übergangsbereich zwischen dem ersten Abschnitt 22a der Prägung 20 und dem zweiten Abschnitt 22b der Prägung 20 ist eine Durchtrittsöffnung 24 angeordnet. Durch diese Durchtrittsöffnung 24 ist der Gasdruckerzeuger 40 teilweise hindurchführbar.

Die Prägung 20 weist wenigstens eine Breite b auf, um den Gasdruckerzeuger 40 wenigstens teilweise in der Prägung 20 aufzunehmen. Im Falle von im Querschnitt runden Gasdruckerzeugern 40, weist die Durchtrittsöffnung 24 wenigstens eine Öffnung mit einem Durchmesser entsprechend der Breite b auf. Bevorzugt weist der erste Abschnitt 22a und der zweite Abschnitt 22b jeweils wenigstens eine Tiefe im Bereich der halben Breite b auf.

Ferner ist im Bereich des ersten Abschnitts 22a eine Mehrzahl an Durchgangsbohrungen 26, vorliegend drei Durchgangsbohrungen 26, parallel zu einer Längserstreckung der Prägung 20 nebeneinander angeordnet. In Fig. 5 ist eine ausschnittsweise vergrößerte Darstellung einer Innenseite 12 des Rahmenseitenteils 10 im Bereich der Durchgangsbohrungen 26 gezeigt. Die Mehrzahl an Durchgangsbohrungen 26 dient einer Positionierung des Gasdruckerzeugers 40 relativ zum Rahmenseitenteil 10. Zusätzlich wird es ermöglicht, verschiedene Gasdruckerzeuger 40 mit unterschiedlicher Länge a einzusetzen. Die Durchgangsbohrungen 26 sind jeweils von einem, bevorzugt ringförmigen, abgeflachten Bereich 28 umrandet. Dieser abgeflachte Bereich 28 ermöglicht eine flächige Krafteinleitung für eine Befestigung des Gasdruckerzeugers 40.

Fig. 6 zeigt den Gasdruckerzeuger 40. Der Gasdruckerzeuger 40 weist einen senkrecht von einem Gehäuse 42 des Gasdruckerzeugers 40 abstehenden Gewindebolzen 48 auf. Der Gasdruckerzeuger 40 weist ein an dem Gehäuse 42 fixiertes Gasleitblech 44 auf, mittels welchem ausströmendes Gas in eine vorgegebene Strömungsrichtung geleitet werden kann. Der Gasdruckerzeuger 40 weist auf einer dem Gasleitblech 44 gegenüberliegenden Seite eine Vielzahl an Gasaustrittsöffnungen 46 auf, durch welche hindurch das freigesetzte Gas austreten kann. An einem dem Gewindebolzen 48 entfernten Endabschnitt des Gasdruckerzeugers 40 ist eine Steckverbindung zum Anschließen einer Auslösesteuerung vorgesehen.

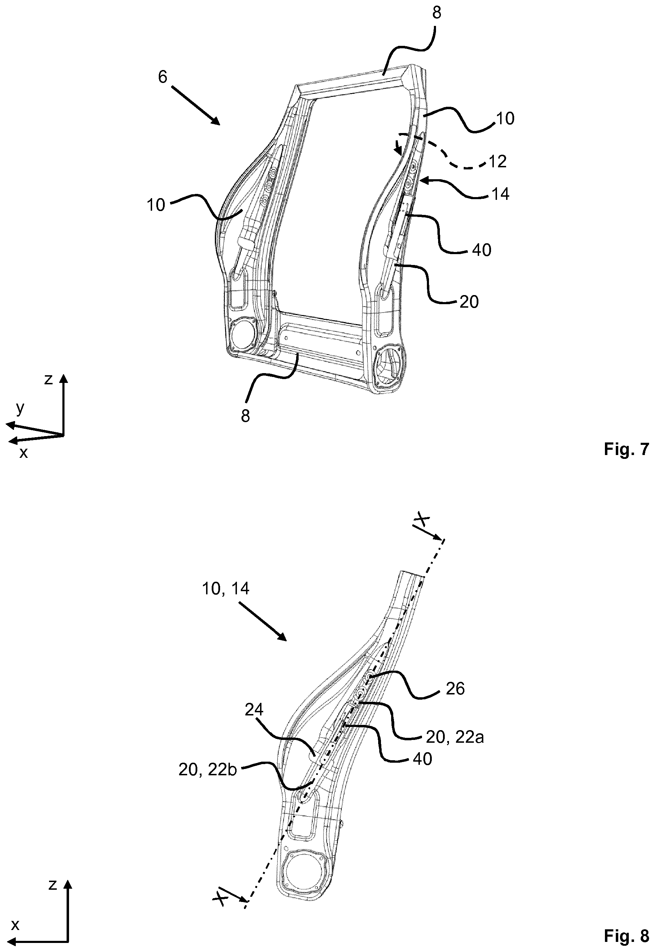

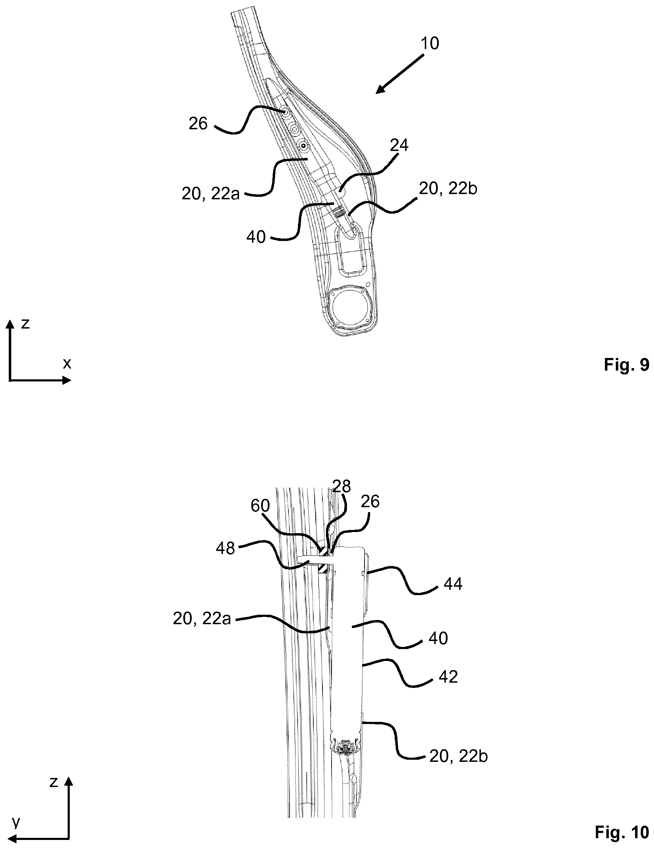

Die Figuren 7 und 8 entsprechend im Wesentlichen den Darstellungen der Figuren 2 und 3 mit dem Unterschied, dass der Gasdruckerzeuger 40 montiert ist. Fig. 9 zeigt eine Innenseite 12 des Rahmenseitenteils 10 mit dem montierten Gasdruckerzeuger 40. Der Gasdruckerzeuger 40 ist in montiertem Zustand mittels des durch eine der Durchgangsbohrungen 26 hindurch geführten Gewindebolzens 48 an dem Rahmenseitenteil 10 befestigt. Der Gewindebolzen 48 des Gasdruckerzeugers 40 ist hierzu, wie in Fig. 10 gezeigt, mittels einer Mutter 60 an dem Rahmenseitenteil 10 fixiert. Die Mutter 60 ist von der dem Gasdruckerzeuger 40 gegenüberliegenden Seite des Rahmenseitenteils 10 auf den Gewindebolzen 48 aufgeschraubt. Die Mutter 60 liegt hierbei flächig an dem um die Durchgangsbohrung 26 angeordneten abgeflachten Bereich 28 an.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Rahmen
- 8: Quertraverse
- 10: Rahmenseitenteil
- 12: Innenseite
- 14: Außenseite
- 20: Prägung
- 22a: erster Abschnitt
- 22b: zweiter Abschnitt
- 24: Durchtrittsöffnung
- 26: Durchgangsbohrung
- 28: abgeflachter Bereich
- 40: Gasdruckerzeuger
- 42: Gehäuse
- 44: Gasleitblech
- 46: Gasaustrittsöffnung
- 48: Gewindebolzen
- 60: Mutter
- a: Länge
- b: Breite
- x: Längsrichtung
- y: Querrichtung
- z: Vertikalrichtung

## Patentansprüche

1. Fahrzeugsitz (1), insbesondere Kraftfahrzeugsitz, aufweisend ein Sitzteil (2) und eine Lehne (4), wobei wenigstens das Sitzteil (2) oder die Lehne (4) einen Rahmen (6) aufweist, wobei der Rahmen (6) wenigstens ein Rahmenseitenteil (10) umfasst, wobei das Rahmenseitenteil (10) eine Prägung (20) zur Befestigung eines Gasdruckerzeugers (40) für einen Airbag aufweist, wobei die Prägung (20) einen ersten Abschnitt (22a) und einen dem ersten Abschnitt (22a) benachbarten zweiten Abschnitt (22b) umfasst, wobei der erste Abschnitt (22a) und der zweite Abschnitt (22b) der Prägung (20) im Wesentlichen parallel zur Querrichtung (y) entgegengesetzt eingeprägt bzw. ausgeprägt sind, wobei der erste Abschnitt (22a) in Richtung eines Rahmeninneren geprägt ist, wobei der zweite Abschnitt (22b) in Richtung eines Rahmenäußeren geprägt ist, **dadurch gekennzeichnet, dass**
in einem Übergangsbereich zwischen dem ersten Abschnitt (22a) der Prägung (20) und dem zweiten Abschnitt (22b) der Prägung (20) eine Durchtrittsöffnung (24) angeordnet ist.

2. Fahrzeugsitz (1) nach Anspruch 1, wobei im Bereich des ersten Abschnitts (22a) wenigstens eine Durchgangsbohrung (26) angeordnet ist.

3. Fahrzeugsitz (1) nach einem der Ansprüche 1 oder 2, wobei im Bereich des ersten Abschnitts (22a) eine Mehrzahl an Durchgangsbohrungen (26) parallel zu einer Längserstreckung der Prägung (20) nebeneinander angeordnet ist.

4. Fahrzeugsitz (1) nach Anspruch 3, wobei die Mehrzahl an Durchgangsbohrungen (26) einer Positionierung des Gasdruckerzeugers (40) relativ zum Rahmenseitenteil (10) dient.

5. Fahrzeugsitz (1) nach einem der Ansprüche 3 oder 4, wobei die Mehrzahl an Durchgangsbohrungen (26) einen Einsatz von unterschiedlich langen Gasdruckerzeugern (40) ermöglicht.

6. Fahrzeugsitz (1) nach einem der Ansprüche 1 bis 5, wobei die Prägung (20) wenigstens eine Breite (b) aufweist, um den Gasdruckerzeuger (40) wenigstens teilweise, bevorzugt zur Hälfte, in die Prägung (20) einzufügen.

## Claims

1. Vehicle seat (1), in particular motor vehicle seat, having a seat part (2) and a backrest (4), wherein at least the seat part (2) or the backrest (4) has a frame (6), wherein the frame (6) comprises at least one frame side part (10), wherein the frame side part (10) has a stamped portion (20) for fastening a gas pressure generator (40) for an airbag, wherein the stamped portion (20) comprises a first section (22a) and a second section (22b) which is adjacent to the first section (22a), wherein the first section (22a) and the second section (22b) of the stamped portion (20) are stamped inwards and stamped outwards, respectively, in an opposed direction substantially parallel to the transverse direction (y), wherein the first section (22a) is stamped in the direction of a frame interior, wherein the second section (22b) is stamped in the direction of a frame exterior, **characterized in that**
a passage opening (24) is arranged in a transition region between the first section (22a) of the stamped portion (20) and the second section (22b) of the stamped portion (20).

2. Vehicle seat (1) according to Claim 1, wherein at least one through bore (26) is arranged in the region of the first section (22a).

3. Vehicle seat (1) according to either of Claims 1 and 2, wherein a plurality of through bores (26) is arranged next to one another parallel to a longitudinal extent of the stamped portion (20) in the region of the first section (22a).

4. Vehicle seat (1) according to Claim 3, wherein the plurality of through bores (26) serves to position the gas pressure generator (40) relative to the frame side part (10).

5. Vehicle seat (1) according to either of Claims 3 and 4, wherein the plurality of through bores (26) makes use of gas pressure generators (40) of different length possible.

6. Vehicle seat (1) according to one of Claims 1 to 5, wherein the stamped portion (20) has at least a width (b) for inserting the gas pressure generator (40) at least partially, preferably halfway, into the stamped portion (20).

## Revendications

1. Siège de véhicule (1), notamment siège de véhicule automobile, comprenant une partie d'assise (2) et un dossier (4), au moins la partie d'assise (2) et le dossier (4) possédant un cadre (6), le cadre (6) comportant au moins une partie latérale de cadre (10), la partie latérale de cadre (10) possédant une empreinte (20) servant à la fixation d'un générateur de pression de gaz (40) pour un coussin gonflable de sécurité, l'empreinte (20) comportant une première portion (22a) et une deuxième portion (22b) voisine de la première portion (22a), la première portion (22a) et la deuxième portion (22b) de l'empreinte (20) étant imprimées ou marquées à l'opposé de manière sensiblement parallèle à la direction transversale (y), la première portion (22a) étant gaufrée en direction d'un intérieur du cadre, la deuxième portion (22b) étant gaufrée en direction d'un extérieur du cadre, **caractérisé en ce que**
une ouverture de traversée (24) est disposée dans une zone de transition entre la première portion (22a) de l'empreinte (20) et la deuxième portion (22b) de l'empreinte (20).

2. Siège de véhicule (1) selon la revendication 1, au moins un perçage traversant (26) étant disposé dans la zone de la première portion (22a).

3. Siège de véhicule (1) selon l'une des revendications 1 et 2, une pluralité de trous traversants (26) étant disposés les uns à côté des autres dans la zone de la première portion (22a) parallèlement à une projection longitudinale de l'empreinte (20).

4. Siège de véhicule (1) selon la revendication 3, la pluralité de trous traversants (26) servant à un positionnement du générateur de pression de gaz (40) par rapport à la partie latérale de cadre (10).

5. Siège de véhicule (1) selon l'une des revendications 3 et 4, la pluralité de trous traversants (26) rendant possible une utilisation de générateurs de pression de gaz (40) de différentes longueurs.

6. Siège de véhicule (1) selon l'une des revendications 1 à 5, l'empreinte (20) possédant au moins une largeur (b) afin d'insérer le générateur de pression de gaz (40) dans l'empreinte (20) au moins partiellement, de préférence de la moitié.
